(19) Europäisches Patentamt
European Patent Office
Office européen des brevets

(11) **EP 3 926 337 B1**

(12) **EUROPEAN PATENT SPECIFICATION**

(45) Date of publication and mention
of the grant of the patent:
**21.08.2024 Bulletin 2024/34**

(21) Application number: **20755920.4**

(22) Date of filing: **03.02.2020**

(51) International Patent Classification (IPC):
*G01N 27/30* *(2006.01)*      *G01N 27/48* *(2006.01)*

(52) Cooperative Patent Classification (CPC):
**G01N 27/48;** G01N 27/3272

(86) International application number:
**PCT/JP2020/003976**

(87) International publication number:
**WO 2020/166416 (20.08.2020 Gazette 2020/34)**

(54) **ELECTRODE DEVICE**

ELEKTRODENVORRICHTUNG

DISPOSITIF ÉLECTRODE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.02.2019 JP 2019023535**

(43) Date of publication of application:
**22.12.2021 Bulletin 2021/51**

(73) Proprietors:
• **Nitto Denko Corporation
Ibaraki-shi
Osaka 567-8680 (JP)**
• **National University Corporation Kumamoto
University
Kumamoto-shi, Kumamoto 860-8555 (JP)**

(72) Inventors:
• **KUNITAKE, Masashi
Kumamoto-shi, Kumamoto 860-8555 (JP)**
• **GOTO, Kyosei
Kumamoto-shi, Kumamoto 860-8555 (JP)**
• **TAKEMOTO, Mitsunobu
Ibaraki-shi, Osaka 567-8680 (JP)**
• **KITAHARA, Tatsuya
Ibaraki-shi, Osaka 567-8680 (JP)**

(74) Representative: **Gill Jennings & Every LLP
The Broadgate Tower
20 Primrose Street
London EC2A 2ES (GB)**

(56) References cited:
WO-A1-2017/089380      JP-A- 2011 527 713
JP-A- 2016 208 883      JP-A- 2018 535 421
US-A1- 2011 136 929

**Description**

The present invention relates to an electrode device.

TECHNICAL FIELD

There are known electrochemical analyses such as cyclic voltammetry in which an electrode device including a working electrode, a counter electrode, and a reference electrode is immersed in an aqueous solution containing an analyte and the electrode potential of the working electrode is cyclically changed.

BACKGROUND ART

In such an electrochemical analysis, first, an electrolysis cell (electrolysis vessel) is prepared. Subsequently, an aqueous solution is poured into the electrolysis cell, and then an electrode device is immersed in the solution inside the vessel. In cyclic voltammetry, for example, the diffusion constant of the analyte is measured.
Further, as a reaction field for the electrochemical analysis, a bicontinuous-phase microemulsions has been proposed. (for example, see Non-patent document 1 below). In the bicontinuous-phase microemulsion, water and oil coexist in a bicontinuous way on the microscale. Thus, a hydrophilic substance is dissolved in the water and a lipophilic substance dissolved in the oil and both of the hydrophilic substance and the lipophilic substance can electrochemically be analyzed.

Citation List

Non-patent Document

Non-patent Document 1: KURAYA, Eisuke. 'Development of Technique to Evaluate Antioxidative Substance Using Bicontinuous Microemulsion'. Kumamoto University, September 25, 2015.

SUMMARY OF THE INVENTION

PROBLEM TO BE SOLVED BY THE INVENTION

However, to electrochemically analyze the bicontinuous-phase microemulsion in Non-patent document 1, it is necessary to contain the bicontinuous-phase microemulsion that is a liquid in the vessel. Thus, there are limitations to the downsizing of the analysis device and the vessel containing the liquid is inconvenient to handle.
The present invention provides an electrode device that can be downsized and easy to handle.

MEANS FOR SOLVING THE PROBLEM

The present invention as defined in claim 1 includes an electrode device, comprising: a first electrode; a second electrode separated from the first electrode with a space therebetween; and an ion-conducting medium extending over the first electrode and the second electrode so as to be in contact with the first electrode and the second electrode, wherein the ion-conducting medium is made of a bicontinuous microemulsion containing a water phase being a continuous phase and an oil phase being a continuous phase, and at least one of the water phase and the oil phase is a gel.
In the electrode device, the ion-conducting medium extends from the first electrode to the second electrode. Thus, the ionic conduction between the first electrode and the second electrode can be carried out.
In addition, in the electrode device, at least one of the water phase and the oil phase is a gel. Thus, the gel phase includes the liquid phase or both of the phases are gels, thereby suppressing the flux of the ion-conducting medium. Accordingly, the ion-conducting medium can be fixed to the first electrode and the second electrode. As a result, it is not necessary to contain the liquid. Thus, the device can be downsized and easy to handle.
According to the embodiment of claim 2, the first electrode is a working electrode, and the second electrode is a counter electrode.
In the structure, the electron transfer from the working electrode allows the oxidation-reduction reaction while the ionic conduction from the working electrode to the counter electrode in the ion-conducting medium is ensured. By that, an electrochemical analysis without an electrolyte solution outside the electrode device can be carried out.
According to the embodiment of claim 3, the device further comprises: a reference electrode separated from the working electrode and the counter electrode with a space between the reference electrode and the working electrode and a space between the reference electrode and the counter electrode, wherein the ion-conducting medium extending over the working electrode, the counter electrode, and the reference electrode so as to be in contact with the working electrode, the counter electrode, and the reference electrode.

Using the structure, with reference to the potential of the reference electrode, an electrochemical measurement such as potentiometry, an electrical conductivity measurement, amperometry-voltammetry, or an alternating-current impedance measurement can be carried out.

According to the embodiment of claim 4, only one of the water phase and the oil phase is a gel.

When only the water phase is a gel, the degree of freedom of the diffusion of the fat-soluble (hydrophobic or lipophilic) substance in the oil phase is higher than that of the case in which both of the water phase and the oil phase are gels. Thus, the fat-soluble analyte is dissolved and diffused in the oil phase and can electrochemically be detected at the working electrode. Meanwhile, the network of the gel in the water phase does not impede the ionic conduction, and thus the fat-soluble analyte has excellent responsiveness to the detection. Thus, the fat-soluble analyte can accurately be analyzed.

When only the oil phase is a gel, the degree of freedom in the water phase is higher than that in the case in which both of the water phase and the oil phase are gels. Thus, when the hydrophilic analyte is dissolved in the water phase, the ionic conduction in the hydrophilic analyte is rapidly carried out and thus the hydrophilic analyte has excellent responsiveness. Therefore, the hydrophilic analyte can accurately be analyzed.

Therefore, using the structure, the fat-soluble analyte or the hydrophilic analyte can accurately be analyzed.

According to the embodiment of claim 5, the oil phase does not contain an electrolyte, and the water phase contains an electrolyte.

With the structure, when the fat-soluble analyte is dissolved in the oil phase, the ionic conduction in the fat-soluble analyte is carried out in the interface of the oil phase and the water phase without containing the electrolyte in the oil phase. Thus, the fat-soluble analyte can be analyzed without containing the electrolyte in the oil phase.

According to the embodiment of claim 6, the first electrode and the second electrode each have a flat-belt shape, and the ion-conducting medium has a sheet shape.

The structure allows the electrode device to be thinned.

EFFECTS OF THE INVENTION

The electrode device of the present invention is small and can easily be handled.

BRIEF DESCRIPTION OF THE DRAWINGS

[FIG. 1] FIG. 1A to FIG. 1C are plan views illustrating the steps of producing the electrode devices of the first embodiment and the second embodiment of the present invention. FIG. 1A depicts the step of preparing the electrode device. FIG. 1B depicts the step of disposing a mask layer. FIG. 1C depicts the step of disposing an ion-conducting medium.

[FIG. 2] FIG. 2A to FIG. 2D are cross-sectional views illustrating the step of producing the electrode device of the first embodiment and the second embodiment of the present invention. The cross-sectional views on the left side are taken along lines X-X of FIG. 1A to FIG. 1C. The cross-sectional views on the right side are taken along lines Y-Y of FIG. 1A to FIG. 1C.

FIG. 2A illustrates the step of preparing the electrode device. FIG. 2B illustrates the step of disposing the mask layer. FIG. 2C illustrates the step of disposing a bicontinuous microemulsion that is yet to be gelatinized. FIG. 2D illustrates the step of forming an ion-conducting medium.

[FIG. 3] FIG. 3 is a view of a mode in which a solution containing an analyte is electrochemically analyzed with the electrode device illustrated in FIG. 1C to FIG. 2D.

[FIG. 4] FIG. 4 is a plan view of a variation of the electrode device of the first embodiment illustrated in FIG. 1C (in which another reference electrode is brought into contact with the ion-conducting medium).

[FIG. 5] FIG. 5 is a plan view of a variation of the electrode device of the first embodiment illustrated in FIG. 1C (that is an electrode device without a reference electrode).

[FIG. 6] FIG. 6 is a cross-sectional view of the measurement device used in the cyclic voltammetry of Comparative Example 1.

[FIG. 7] FIG. 7 illustrates the cyclic voltammogram and diffusion constant of Example 1.

[FIG. 8] FIG. 8 illustrates the cyclic voltammogram and diffusion constant of Comparative Example 1.

[FIG. 9] FIG. 9 illustrates the cyclic voltammogram of Example 2.

DESCRIPTION OF THE EMBODIMENTS

The electrode device of the present invention includes a first electrode, a second electrode, and an ion-conducting medium extending over the first electrode and the second electrode. The ion-conducting medium consists of a bicontinuous microemulsion including a water phase that is a continuous phase and an oil phase that is a continuous phase. At least one of the water phase and the oil phase is a gel.

<First embodiment>

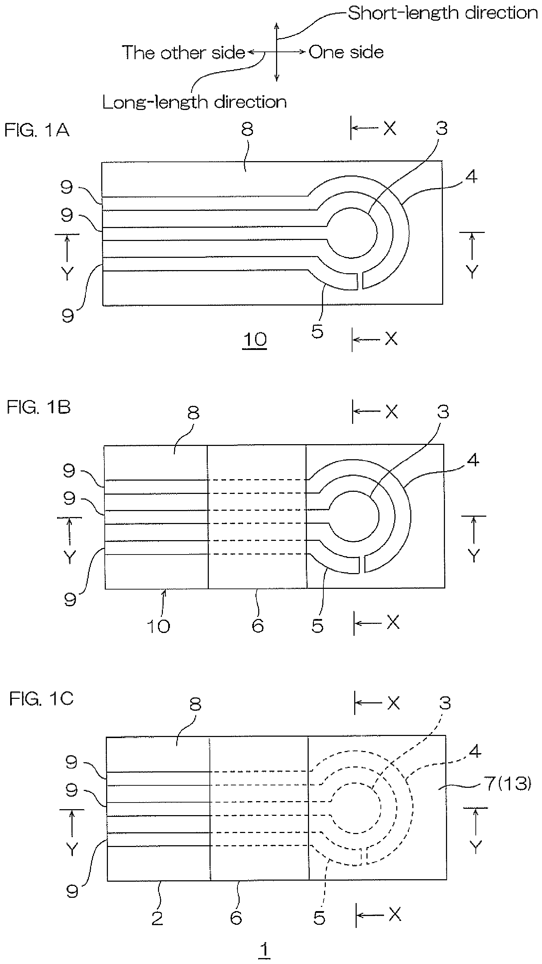

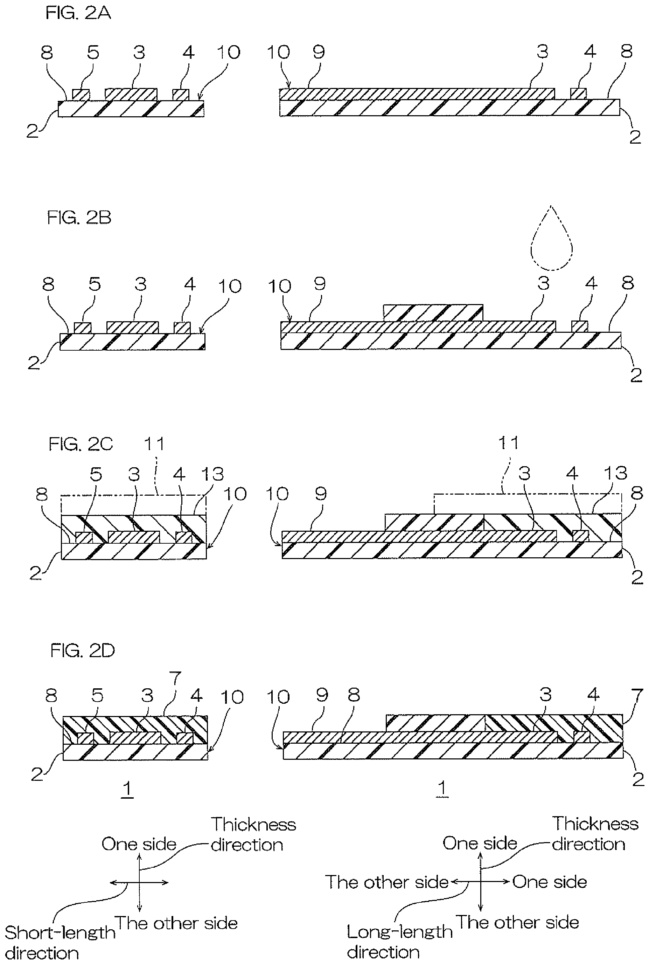

The first embodiment of an electrode device in which the water phase is a gel will be described.
As illustrated in FIG. 1C and FIG. 2D, an electrode device 1 is an example of an electrode for an electrochemical analysis or an electrochemical measurement electrode. The electrode device 1 has an approximately plate shape having a one-side surface and the other-side surface that face each other in a thickness direction. Further, the electrode device 1 has an approximately rectangular shape (longitudinally long rectangular shape) extending long in a long-length direction orthogonal to the thickness direction and extending short in a short-length direction orthogonal to the thickness direction and the long-length direction in a plan view.
The electrode device 1 includes a substrate 2, a plurality of electrodes 3, 4, and 5, wires 9 each corresponding to the plurality of electrodes 3, 4, and 5, a mask layer 6, and an ion-conducting medium 7.
The substrate 2 has a one-side surface 8 and the other-side surface that face each other in the thickness direction. Meanwhile, the substrate 2 forms an outer shape of the electrode device 1 in the plan view. Examples of the material of the substrate 2 include an insulating materials such as polymers and ceramics (for example, alumina). The dimensions of the substrate 2 are appropriately set depending on the purpose and use of the electrode device 1. The substrate 2 has a thickness of, for example, 3000 μm or less and, for example, 10 μm or more. Further, the substrate 2 has a length in the short-length direction of, for example, 5 mm or more and, for example, 100 mm or less, preferably 30 mm or less. The substrate 2 has a length in the long-length direction of, for example, 10 mm or more, preferably, 20 mm or more and, for example, 1000 mm or less, preferably 50 mm or less.
The plurality of electrodes 3, 4, and 5 is disposed on the one-side surface 8 of the substrate 2. Specifically, the plurality of electrodes 3, 4, and 5 is in contact with the one-side surface 8 of the substrate 2. Further, the plurality of electrodes 3, 4, and 5 is disposed on a one-side end of the substrate 2 in the long-length direction. The plurality of electrodes 3, 4, and 5 each have a flat-belt shape (a strip shape).
Furthermore, the plurality of electrodes 3, 4, and 5 are disposed with spaces therebetween. The plurality of electrodes 3, 4, and 5 includes a working electrode 3 as an example of a first electrode, a counter electrode 4 as an example of a second electrode, and a reference electrode 5. Preferably, the plurality of electrodes 3, 4, and 5 consists of the working electrode 3, the counter electrode 4, and the reference electrode 5, respectively.
The working electrode 3 has, for example, an approximately circular plate (disk) shape in the plan view. The working electrode 3 has a surface area of, for example, 5 mm$^2$ or more, preferably, 10 mm$^2$ or more.
The counter electrode 4 is disposed relative to the working electrode 3 with a space therebetween. Specifically, the working electrode 4 has an approximately arc shape and shares the same center with the working electrode 3 in the plan view. The central angle of the working electrode 4 is, for example, more than 150°, preferably, more than 180° and, for example, less than 360°, preferably less than 270°. The space between the counter electrode 4 and the working electrode 3 (the closest distance and the same will apply hereinafter) is, for example, 0.1 mm or more and, for example 10 mm or less.
The reference electrode 5 is disposed relative to the working electrode 3 and the counter electrode 4 with spaces therebetween. Specifically, the reference electrode 5 has an approximately arc shape (or approximately C shape, or approximately U shape) and shares the same center with the working electrode 3 in the plan view. Further, the reference electrode 5 has an arc shape that is an extension of the arc shape of the counter electrode 4 in its circumferential direction. However, the reference electrode 5 is separated from a one-side end in the circumferential direction of the counter electrode 4 with a space therebetween in the circumferential direction. The central angle of the working electrode 4 is, for example, more than 0°, preferably, more than 30° and, for example, less than 180°, preferably less than 75°.
The other-side ends in the long-length direction of the plurality of electrodes 3, 4, and 5 respectively connect to one-side ends in the long-length direction of the three wires 9. The three wires 9 extend in the long-length direction and face each other with spaces therebetween in the short-length direction. The three wires 9 extend from an intermediate part in the long-length direction of the substrate 2 to the other-side end in the long-length direction of the substrate 2.
Examples of the materials of the plurality of electrodes 3, 4, and 5 and the wire 9 include metals, and carbon compounds. Preferably, metals are used. Particularly, as the material of the working electrode 3 and the counter electrode 4, more preferably, gold is used. As the material of the reference electrode 5, more preferably, silver is used.
The thickness of the plurality of electrodes 3, 4, and 5 and the thickness of the wires 9 are, for example, identical and, specifically, for example, 500 μm or less, preferably 250 μm or less, more preferably 100 μm or less and, for

example 10 μm or more.

The mask layer 6 is disposed on the one-side surface 8 of the substrate 2 so as to cover the one-side ends of the three wires 9. The mask layer 6 has, in the plan view, an approximately rectangular shape (film shape) extending entirely in the short-length direction of the substrate 2 at the intermediate part of the substrate 2 in the long-length direction. The mask layer 6 defines the plurality of electrodes 3, 4, and 5. Examples of the material of the mask layer 6 include the above-described insulating materials (such as polymers).

The ion-conducting medium 7 has a layer (film) shape extending over the working electrode 3, the counter electrode 4 and the reference electrode 5 so as to cover them. Further, the ion-conducting medium 7 has an approximately rectangular sheet shape including the working electrode 3, the counter electrode 4, and the reference electrode 5 in the plan view. The ion-conducting medium 7 is disposed on the one-side end of the one-side surface 8 of the substrate 2 in the long-length direction. The ion-conducting medium 7 is in contact with: a one-side surface in the thickness-direction and a side surface of the working electrode 3; a one-side surface in the thickness direction and a side surface of the counter electrode 4; a one-side surface in the thickness direction and a side surface of the reference electrode 5; and the one-side surface 8 exposed from the working electrode 3, the counter electrode 4, and the reference electrode 5 on the substrate 10.

The ion-conducting medium 7 consists of a bicontinuous microemulsion. The bicontinuous microemulsion includes a water phase that is a continuous phase and, an oil phase that is a continuous phase. In the bicontinuous microemulsion, the water phase contains, for example, water and an electrolyte (for example, an inorganic salt such as sodium nitrate, sodium chloride, sodium hypochlorite, sodium hypophosphite, or sodium phosphite). The oil phase contains, for example, an organic solvent (aromatic hydrocarbon such as toluene, or aliphatic hydrocarbon such as hexane). Further, the bicontinuous microemulsion contains a surfactant (an anionic surfactant such as sodium lauryl sulfate) and an auxiliary surfactant (lower alcohol having 1 or more and 5 or less carbons such as 2-butanol) that are located in the interface of the water phase and the oil phase. The surfactant and the auxiliary surfactant are located in the interface of the water phase and the oil phase.

Examples, types, and contents (including the content of water) of the above-described electrolyte, organic solvent, surfactant, and auxiliary surfactant and the method of preparing the bicontinuous microemulsion are described in detail in, for example, Japanese Translation of PCT International Application Publication No. H9-509196 and the above-described Non-patent document 1.

Further, in the first embodiment, the water phase is a gel. The water phase is prepared as a hydrogel.

As long as having a network structure formed of the water phase, the hydrogel can be either a soft gel (including a swollen gel) or a hard gel (for example, a silica gel including partially dehydrated silica). As the hydrogel, preferably, a soft hydrogel in which water is swollen is used.

In the hydrogel, a first gelatinizing agent described below forms a three dimensional network structure at the molecular level in the water phase.

To prepare the water phase as a soft hydrogel, the first gelatinizing agent is contained in the water phase.

Examples of the first gelatinizing agent include first to third types. For the first type, a gelatinizing agent material is blended in a water phase and then allowed to react, thereby generating the first gelatinizing agent and simultaneously gelatinizing the water phase. For the second type, the gelatinizing agent is blended in a water phase, and the mixture is heated to temporarily dissolve the first gelatinizing agent in the water phase and then cooled, thereby gelatinizing the water phase. For the third type, the first gelatinizing agent is blended in a water phase and mixed (without heating and cooling), thereby gelatinizing the water phase. The above-described first to third types are not clearly distinguished and, for example, are allowed to overlap.

Examples of the first type include synthetic polymers such as polyacrylamide compounds, polyacrylic acid compounds, polyvinyl alcohol, and polyamino acid compounds.

Examples of the second type include natural polymers such as agar, gelatin, agarose, carrageenan, and alginate.

Examples of the third type include the synthetic polymers exemplified as the first type.

These can be used singly or in combination.

Preferably, the first type and the third type are used. More preferably, the first type, specifically, the polyacrylamide compound is used.

The polyacrylamide compound is polymers of a monomer component containing acrylamide monomers as the main component. The monomer component is included in the gelatinizing agent material. Examples of the acrylamide monomers include nonionic monomers such as acrylamide, and methacrylamide, and anionic monomers such as (meth)acrylamide-methylpropanesulfonate (specifically, sodium salts). Preferably, the non-ionic monomer, more preferably, acrylamide is used. The content of the main component (preferably, the acrylamide monomers) in the monomer component is, for example, more than 50 mass%, preferably 70 mass% or more.

Further, the monomer component can contain, for example, a cross-linkable monomer having two vinyl groups such as methylenebis (meth)acrylamide. The content of the water-soluble cross-linking agent in the monomer component is the rest of the above-described main component.

When the polyacrylamide compound is used as the first type, for example, the above-described monomer component is blended together with the water-soluble initiator in the water phase and the oil phase is blended in the mixture to prepare a bicontinuous microemulsion, and then the monomer component is polymerized with, for example, light or heat, thereby preparing the first type. The water-soluble initiator constitutes the gelatinizing agent material together with the monomer component.

Examples of the water-soluble initiator include a thermal initiator, and a photo initiator (specifically, a hydroxyketone compound such as 1-[4-(2-hydroxyethoxy)-phenyl]-2-hydroxymethyl-1-propane-1-on (Irgacure 2959)). Preferably, a photo initiator is used. The parts by mass of the water-soluble initiator relative to 100 parts by mass of the monomer component is, for example, 1 part by mass or more, preferably 5 parts by mass or more and, for example, 25 parts by mass or less, preferably 15 parts by mass or less.

The ratio of the first gelatinizing agent (or the ratio of the gelatinizing agent material) (the ratio of the monomer component and the water-soluble initiator in total) relative to 100 parts by mass of the water and the electrolyte in total is, for example, 1 part by mass or more, preferably 5 parts by mass or more and, for example, 40 parts by mass or less, preferably 25 parts by mass or less.

The ion-conducting medium 7 is a bicontinuous microemulsion where the water phase gelatinized with the first gelatinizing agent and the oil phase having a higher degree of freedom than that of the water phase are each formed as a continuous phase. The electrolyte is contained in the water phase. The surfactant and the auxiliary surfactant are located in the interface of the water phase and the oil phase.

In the bicontinuous microemulsion, the water phase and the oil phase are continuous. Thus, the gel of the water phase can form a three dimensional network structure. The oil phase exists in pore spaces of the three dimensional network structure. The oil phase is included (incorporated) as a liquid in the gelatinized water phase and can move among the pore spaces relatively freely.

The degree of freedom of the oil phase has a higher than the degree of freedom of the gelatinized water phase. Meanwhile, in the bicontinuous microemulsion, the oil phase exists in the above-described tiny pore spaces, and thus the fall or leakage of the oil phase from the water phase in the ion-conducting medium 7 is suppressed.

The thickness of the ion-conducting medium 7 is a distance between the one-side surface 8 of the substrate 10 and the one-side surface of the ion-conducting medium 7 in the thickness direction and is, for example, 10 $\mu$m or more, preferably 100 $\mu$m or more and, for example, 1500 $\mu$m or less.

To produce the electrode device 1, for example, as illustrated in FIG. 1A and FIG. 2A, the electrode substrate 10 including the substrate 2 and the plurality of electrodes 3, 4, and 5 disposed on the one-side surface 8 is first prepared. The electrode substrate 10 includes the three wires 9 continuous to the plurality of electrodes 3, 4, and 5 on the one-side surface 8 of the substrate 2. As the electrode substrate 10, a commercially available product can be used.

Subsequently, as illustrated in FIG. 1B and FIG. 2B, the mask layer 6 is disposed on the electrode substrate 10. For example, a film made of polymers is adhered to the electrode substrate 10.

Thereafter, as illustrated in FIG. 1C, and FIG. 2C to FIG. 2D, the ion-conducting medium 7 is disposed on the electrode substrate 10 so that the ion-conducting medium 7 is in contact with and extends over the working electrode 3, the counter electrode 4, and the reference electrode 5.

For example, first, a bicontinuous microemulsion in which the water phase is yet to be gelatinized is prepared. Specifically, when the first gelatinizing agent is the first type, water, an electrolyte, an organic solvent, a gelatinizing agent material (a monomer component and a water-soluble initiator), a surfactant, and an auxiliary surfactant are blended and mixed. The electrolyte can be prepared with an electrolyte aqueous solution previously dissolved in water, and then be blended.

In this manner, the bicontinuous microemulsion containing the water phase containing the water, the electrolyte, and the gelatinizing agent material; the oil phase containing the organic solvent; and the surfactant and auxiliary surfactant existing in the interface between the water phase and the oil phase.

Subsequently, the above-described bicontinuous microemulsion 13 is disposed on the electrode substrate 10 so as to be in contact with and extend over the working electrode 3, the counter electrode 4, and the reference electrode 5. Specifically, the bicontinuous microemulsion 13 is, for example, applied (including dropped) on the working electrode 3, counter electrode 4, and reference electrode 5 of the electrode substrate 10 (see the right side view of FIG. 2B).

At the time, the mask layer 6 functions as a weir portion that suppresses the flow of the bicontinuous microemulsion 13 that a liquid at room temperature (25°C) toward the wires 9.

Thereafter, the water phase in the bicontinuous microemulsion 13 is gelatinized. When the initiator contains a photo initiator, the bicontinuous microemulsion 13 is irradiated with ultraviolet light. Specifically, for example, a covering member 11 (phantom line) having translucency is disposed on one side of the bicontinuous microemulsion in the thickness direction. Subsequently, through the covering member 11, the bicontinuous microemulsion 13 is irradiated with ultraviolet light. In this manner, in the water phase, the monomer component in the gelatinizing agent material is polymerized in the presence of the water-soluble initiator, thereby preparing the first gelatinizing agent. At the same time as the preparation of the first gelatinizing agent, a first gel forms the three dimensional network structure at the molecular level in the water phase to form a network structure in the water phase. In this manner, the ion-conducting medium 7 in which the water phase becomes a gel (chemical gel) is prepared.

In the ion-conducting medium 7, the electrolyte is contained in the water phase and exists as an ion in the water phase. In the ion-conducting medium 7, the surfactant and the auxiliary surfactant exist in the interface of the water phase and the oil phase.

In this manner, the electrode device 1 including the electrode substrate 10, and the ion-conducting medium 7 in contact with and extending over the working electrode 3, the counter electrode 4, and the reference electrode 5 is produced.

Next, a method of carrying out cyclic voltammetry of a solution 14 containing a fat-soluble (hydrophobic or lipophilic) analyte with the electrode device 1 will be described as an example of a potential control measurement.

The electrode device 1 is prepared in the method described above. Meanwhile, the other-side ends of three electrodes 9 in the long-length direction are electrically connected to a potentiostat through lines not illustrated.

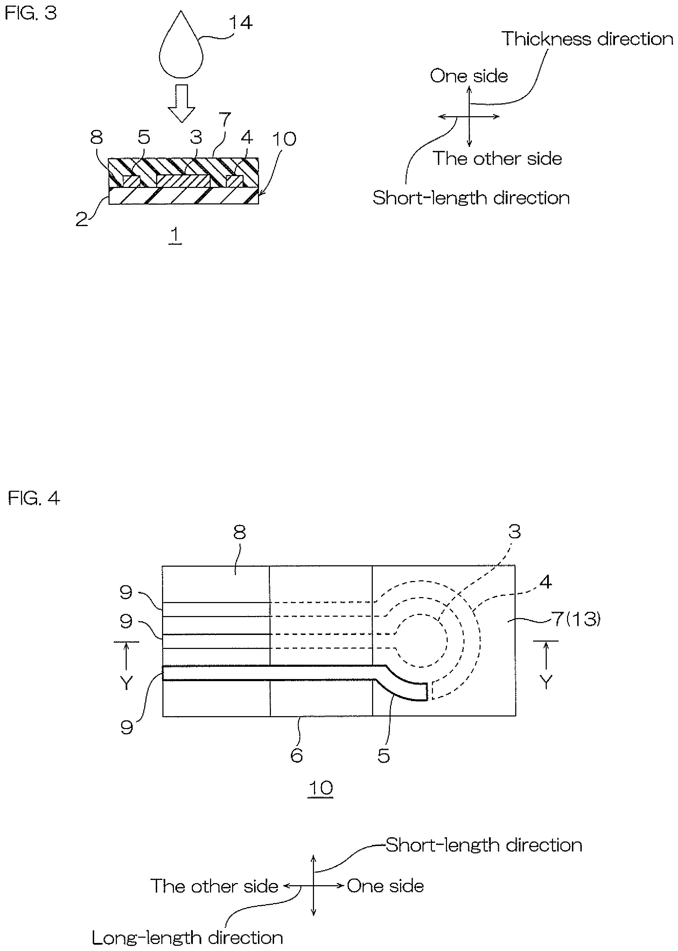

Subsequently, as illustrated in FIG. 3, the solution 14 is disposed on the ion-conducting medium 7.

The solution 14 includes, for example, a fat-soluble analyte, and, a fat-soluble solvent dissolving the fat-soluble analyte. The fat-soluble analyte is not especially limited and includes, for example, ferrocene, or an antioxidative substance. Examples of the fat-soluble solvent includes the above-described organic solvents (aromatic solvents such as toluene), edible oils (such as olive oil), and oils for cosmetics.

For example, the ion-conducting medium 7 is impregnated with the solution by applying (or dropping). Specifically, the solution is applied (dropped) to the one-side surface of the ion-conducting medium 7 in the thickness direction from one side (for example, an upper side) of the ion-conducting medium 7 in the thickness direction. The amount of application (drop) of the solution is not especially limited as long as the ion-conducting medium 7 is impregnated and the ionic conduction between the working electrode 3 and the counter electrode 4 is ensured.

In this manner, the analyte is fat-soluble and thus distributed to the oil phase. In other words, the fat-soluble analyte moves not to the water phase that is a gel but to the oil phase.

Thereafter, by the cyclic voltammetry, the electrode potential of the working electrode 3 is cyclically changed.

Then, the ions of the analyte are transferred from the interface continuously existing in proximity to the oil phase (the interface of the oil phase and the water phase) through the water phase between the working electrode 3 and the counter electrode 4.

In this manner, for example, the peak current is detected. Based on the peak current, a diffusion constant D of the fat-soluble analyte is obtained. Specifically, by assigning each parameter to the following expression (1), the diffusion constant D is obtained.

[Expression 1]

$$i_p = 0.4463nFAC \left(\frac{nFvD}{RT}\right)^{\frac{1}{2}} \qquad (1)$$

Each of the parameters in n the expression is described below.

$i_p$: the peak current
n = equivalent/mol of the analyte
A = the surface area $cm^2$ of the working electrode 3
D = the diffusion coefficient ($cm^2$/sec)
C = the concentration of the analyte (mol/ $cm^3$)
v = the sweep velocity (V/sec)

Meanwhile, in the electrode device 1, the ion-conducting medium 7 extends from the working electrode 3 to the counter electrode 4. Thus, the ionic conduction between the working electrode 3 and the counter electrode 4 can be carried out.

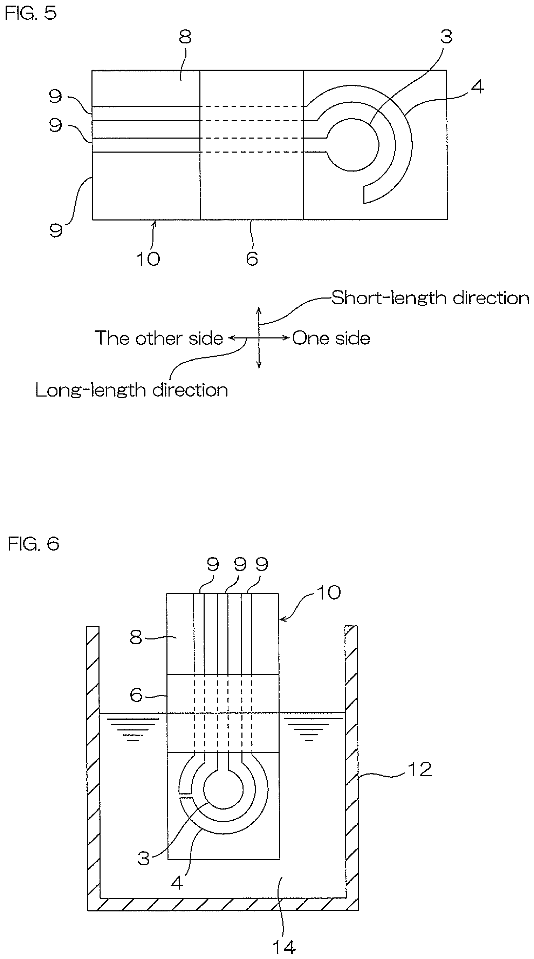

In addition, in the electrode device 1, the water phase in the bicontinuous microemulsion is a gel. Then, the gel of the water phase includes the liquid of the oil phase, and thus the flux of the ion-conducting medium 7 is suppressed. Accordingly, the ion-conducting medium 7 is fixed to the working electrode 3 and the counter electrode 4. As a result, it is not necessary to contain the solution 14 as described in Non-patent document 1 (see FIG. 6). Hence, the device can be downsized and the electrode device 1 can easily be handled.

Further, in the electrode device 1, while the electron transfer from the working electrode 3 allows an oxidation-reduction reaction, the ionic conduction from the working electrode 3 to the counter electrode 4 in the ion-conducting medium 7 is ensured. Thus, an electrochemical analysis, specifically, cyclic voltammetry can be carried out without having an electrolyte solution outside the electrode device 1.

Furthermore, in the electrode device 1, with reference to the potential of the reference electrode 5, an electrochemical measurement such as potentiometry, an electrical conductivity measurement, amperometry-voltammetry, or an alternating-current impedance measurement can be carried out.

Furthermore, in the electrode device 1, the fat-soluble analyte is dissolved in the oil phase.

Thus, without containing the electrolyte in the oil phase, the ionic conduction in the fat-soluble analyte can rapidly be carried out in the interface of the oil phase and the water phase. Thus, the fat-soluble analyte can be analyzed without the electrolyte in the oil phase.

Furthermore, in the electrode device 1, while the working electrode 3, the counter electrode 4 and the reference electrode 5 each have a flat-belt shape, the ion-conducting medium 7 has a sheet shape. Thus, the electrode device 1 can be thinned.

<Variations of the first embodiment>

In each of the following variations, the same members and steps as in the first embodiment will be given the same numerical references and the detailed description thereof will be omitted. Further, each of the variations has the same operations and effects as those of the first embodiment unless especially described otherwise. Furthermore, the first embodiment and the variations can appropriately be combined.

In the method of producing the electrode device 1 in the first embodiment, first, the bicontinuous microemulsion in which the water phase is yet to become a gel is disposed on the working electrode 3, the counter electrode 4, and the reference electrode 5 and, thereafter, the water phase is gelatinized.

However, although not illustrated, for example, after a film of a bicontinuous microemulsion with a gelatinized water phase is prepared, the film of the bicontinuous microemulsion can be brought into contact with (adhered to) the working electrode 3, the counter electrode 4, and the reference electrode 5. At the time, by previously impregnating the film of the bicontinuous microemulsion with a solution containing the analyte and, thereafter, bringing the film impregnated with the solution into contact with the working electrode 3, the counter electrode 4, and the reference electrode 5, the application (drop) of the solution 14 can be omitted.

Further, as an preferable example of the gelatinizing agent, the first type is used to describe the preparation of the ion-conducting medium 7. However, as the third type that is another preferable example of the gelatinizing agent, synthetic polymers (a polyamide compound) that are previously (separately) synthesized can be blended (dispersed) in the water phase to gelatinize the water phase.

Furthermore, in FIG. 3, the solution containing the analyte is applied (dropped) on the one-side surface of the ion-conducting medium 7 in the thickness direction. However, the solution containing the analyte can alternatively be applied on the other-side surface of the ion-conducting medium 7 separately produced in the thickness direction and, thereafter, the other-side surface of the ion-conducting medium 7 is brought into contact with the working electrode 3, the counter electrode 4, and the reference electrode 5. Alternatively, it is also possible to release the ion-conducting medium 7 formed on the electrode substrate 10 from the electrode substrate 10 so that a gap is formed therebetween and, thereafter, dispose the solution 14 containing the analyte the gap between the ion-conducting medium 7 and the electrode substrate 10 and, thereafter, dispose the ion-conducting medium 7 on the electrode substrate 10 again.

Further, although not illustrated, the shape of each of the working electrode 3, the counter electrode 4, and the reference electrode 5 is not limited to the above, and can be, for example, a comb shape (a comb-shaped electrode).

Preferably, the working electrode 3, the counter electrode 4, and the reference electrode 5 are each formed into a flat-belt shape, and the ion-conducting medium 7 is formed into a sheet shape. Using the structure, the electrode device 1 can be thinned.

Furthermore, in the first embodiment, the electrode device 1 includes the substrate 2. However, for example, although not illustrated, the electrode device 1 does not need including the substrate 2.

Furthermore, in the first embodiment, the electrode device 1 includes the mask layer 6. However, for example, although not illustrated, the electrode device 1 does not need including the mask layer 6.

In the structures, the ion-conducting medium 7 extends over the working electrode 3, the counter electrode 4, and the reference electrode 5 while being in contact therewith. Thus, while the oxidation-reduction reaction is allowed in the working electrode 3, the corresponding oxidation-reduction reaction is allowed in the counter electrode 4. By that means, potentiometry can accurately be carried out with respect to the potential of the reference electrode 5.

Further, in addition to the potential control measurement, a galvanostatic measurement (current control measurement) can be carried out. In the structure, the ion-conducting medium 7 extends over the working electrode 3, the counter electrode 4, and the reference electrode 5 while being in contact therewith. Thus, the galvanostatic measurement can accurately be carried out.

Furthermore, as illustrated in FIG. 5, the electrode device 1 can include the working electrode 3 and the counter electrode 4 without including the reference electrode 5. In the structure, using the working electrode 3 and the counter electrode 4, the potential difference of the analytes caused therebetween can be measured. Specifically, while the electron transfer from the working electrode 3 allows an oxidation-reduction reaction, the ionic conduction from the working electrode 3 to the counter electrode 4 in the ion-conducting medium 7 is ensured. Thus, cyclic voltammetry can be carried out without the electrolyte solution outside the electrode device 1.

With the electrode device 1 including the above-described working electrode 3 and the counter electrode 4 without including the reference electrode 5 as the device structure, potentiometry and a galvanostatic measurement can be carried out. In this method, for example, the reference electrode 5 is prepared as a separate member of the electrode device 1 (the reference electrode 5 included in a separate external device), and the electrode device 1 including the working electrode 3 and the counter electrode 4 is prepared. Thereafter, in a cyclic voltammetry measurement, as the thick solid line of FIG. 4 shows, the separate reference electrode 5 is brought into contact with (pressed to) the ion-conducting medium 7 from the outside (for example, the one side in the thickness direction).

<Second embodiment>

In the following second embodiment, the same members and steps as in the first embodiment and the variations will be given the same numerical references and the detailed description thereof will be omitted. Further, the second embodiment has the same operations and effects as those of the first embodiment and the variations unless especially described otherwise. Furthermore, the first embodiment, the variations, and the second embodiment can appropriately be combined.

The second embodiment in which electrode device with a oil phase that is a gel will be described.

The oil phase is prepared as an organogel.

The organogel can be either a soft gel (including a swollen gel) or a hard gel as long as having a network structure formed of the oil phase. As the organogel, preferably, a soft gel is used.

In the organogel, a second gelatinizing agent described below forms a three dimensional network structure at the molecular level in the oil phase.

To prepare the oil phase as a soft organogel, the second gelatinizing agent is blended in the oil phase.

Examples of the second gelatinizing agent include a fourth type and a fifth type. For the fourth type, the second gelatinizing agent is blended into the oil phase, the mixture is heated to temporarily dissolve the second gelatinizing agent into the oil phase and, thereafter, the mixture is cooled, thereby gelatinizing the oil phase. For the fifth type, the second gelatinizing agent is blended and mixed into the oil phase (without heating and cooling), thereby gelatinizing the oil phase.

Examples of the fourth type include hydroxycarboxylic acid.

Examples of the fifth type include oil-soluble polymers and amino acid gelatinizing agent.

These can be used singly or in combination.

The above-described second gelatinizing agents (the fourth and fifth types) are described in, for example, Japanese Unexamined Patent Publication No. 2013-141664.

As the second gelatinizing agent, preferably, the fourth type, specifically, hydroxycarboxylic acid is used. More preferably, hydroxycarboxylic acid having 12 or more and 22 or less carbons is used. Even more preferably, 12-hydroxystearic acid is used.

The ratio of the second gelatinizing agent to 100 parts by mass of the organic solvent is, for example 1 part by mass or more, preferably 5 parts by mass or more and, for example, 40 parts by mass or less, preferably 25 parts by mass or less.

In the second embodiment, the ion-conducting medium 7 is a bicontinuous microemulsion in which the oil phase gelatinized by the second gelatinizing agent and the water phase having a higher degree of freedom than that of the oil phase are each formed as a continuous phase. The electrolyte is included in the water phase.

Although having a high degree of freedom, the water phase can exist in proximity to the gelatinized oil phase in the bicontinuous microemulsion. Thus, the fall or leakage of the water phase from the oil phase in the ion-conducting medium 7 is suppressed.

In a method of producing an electrode device 1, as illustrated in FIG. 1A and FIG. 2A, an electrode substrate 10 is prepared.

Next, as illustrated in FIG. 1B and FIG. 2B, a mask layer 6 is disposed on the electrode substrate 10.

Thereafter, as illustrated in FIG. 1C, FIG. 2C, and FIG. 2D, an ion-conducting medium 7 is disposed on the electrode substrate 10 so that ion-conducting medium 7 is in contact with and extends over a working electrode 3, a counter electrode 4 and a reference electrode 5.

First, a bicontinuous microemulsion in which the oil phase is yet to become a gel is prepared. Specifically, when the second gelatinizing agent is the fourth type, water, an electrolyte, an organic solvent, a second gelatinizing agent, a surfactant and an auxiliary surfactant are blended and mixed to prepare a mixture. Thereafter, the mixture is heated. The heating temperature is, for example, 30°C or more, preferably 35°C or more and, for example, 80°C or less, preferably 70°C or less. Thereafter, the heated mixture is disposed on the working electrode 3, the counter electrode 4, and the reference electrode 5 in the electrode substrate 10. Specifically, the mixture is applied to the electrode substrate 10. In this manner, an application film of the bicontinuous microemulsion is prepared.

Thereafter, the application film of the bicontinuous microemulsion is cooled down to room temperature (25°C).

In this manner, the second gelatinizing agent makes the oil phase a gel (specifically, a physical gel). In this manner, on a one-side surface 8 of the electrode substrate 10, the ion-conducting medium 7 in which the oil phase is a gel is formed.

As the ion-conducting medium 7, the bicontinuous microemulsion that contains the water phase containing the water and the electrolyte, the oil phase containing the organic solvent and thus being a gel, and the surfactant and auxiliary surfactant existing in the interface between the water phase and the oil phase is prepared.

Next, using the electrode device 1, cyclic voltammetry of an aqueous solution containing a hydrophilic (water-soluble) analyte will be described.

The aqueous solution includes, for example, the above-described hydrophilic analyte and water dissolving the analyte. As long as being ionic, the hydrophilic analyte is not especially limited and the examples thereof include potassium ferricyanide (potassium hexacyanoferrate) and viologen.

In the cyclic voltammetry measurement, the analyte is hydrophilic (water-soluble) and thus, distributed to the water phase. In other words, the hydrophilic analyte moves not to the oil phase that is a gel but to the water phase and moves between the working electrode 3 and the counter electrode 4.

In this manner, for example, the peak current is detected and, based on the detected peak current, a diffusion constant D of the hydrophilic analyte is obtained.

In the electrode device 1, the oil phase is a gel. Thus, the gel of the oil phase includes the liquid of the water phase, and thereby suppressing the flux of the ion-conducting medium 7. Accordingly, the ion-conducting medium 7 can be fixed to the working electrode 3 and the counter electrode 4. As a result, it is not necessary to contain the solution 14 as described in Non-patent document 1 (see FIG. 6). Thus, the electrode device 1 can be downsized and easily be handled.

<Third embodiment>

In the third embodiment, the same members and steps as in the first embodiment, the variations, and the second embodiment will be given the same numerical references and the detailed description thereof will be omitted. Further, the third embodiment has the same operations and effects as those of the first embodiment, the variations, and the second embodiment unless especially described otherwise. Furthermore, the first embodiment, the variations, the second embodiment, and the third embodiment can appropriately be combined.

In an ion-conducting medium 7, both of the water phase and the oil phase can be gels.

To prepare the ion-conducting medium 7, the water phase is gelatinized in conformity with the producing method in the first embodiment, and the oil phase is gelatinized in conformity with the second embodiment.

In the structure, both of the water phase and the oil phase are gels and thus can be fixed to the working electrode 3, the counter electrode 4, and the reference electrode 5 more firmly than in the first embodiment and the second embodiment.

Meanwhile, to accurately analyze a fat-soluble analyte or a hydrophilic analyte, the first embodiment or the second embodiment is more appropriate than the third embodiment.

In the first embodiment, only the water phase is a gel. Thus, the degree of freedom of the diffusion of a fat-soluble substance in the oil phase is higher than that of the third embodiment in which both of the water phase and the oil phase are gels. Hence, the fat-soluble analyte is dissolved and diffused into the oil phase and thus can electrochemically be detected in the working electrode 3. Meanwhile, the network of the gel in the water phase does not impede the ionic conduction and thus the fat-soluble analyte has excellent responsiveness to the detection. Thus, the fat-soluble analyte can accurately be analyzed.

In the second embodiment, only the oil phase is a gel. Thus, the degree of freedom of in the water phase is higher than that of the third embodiment in which both of the water phase and the oil phase are gels. Hence, when a hydrophilic analyte is dissolved into the water phase, the ionic conduction in the hydrophilic analyte can rapidly be carried out. Thus, the hydrophilic analyte has excellent responsiveness. As a result, the hydrophilic analyte can accurately be analyzed.

Accordingly, the first embodiment and the second embodiment can respectively analyze a fat-soluble analyte and a hydrophilic analyte more accurately than the third embodiment. Examples

The present invention will be more specifically described below with reference to Examples and Comparison Example. The present invention is not limited to any of the Examples and Comparison Example. The specific numeral values used in the description below, such as mixing ratios (contents), physical property values, and parameters can be replaced with corresponding mixing ratios (contents), physical property values, parameters in the above-described "DESCRIPTION OF EMBODIMENTS", including the upper limit value (numeral values defined with "or less", and "less than") or the lower limit value (numeral values defined with "or more", and "more than").

Example 1

All the components shown in Table 1 were blended in accordance with the amounts shown in Table 1, thereby preparing a bicontinuous microemulsion.

Separately, as illustrated in FIG. 1A and FIG. 2A, an electrode substrate 10 including a substrate 2, a working electrode 3, a counter electrode 4, and a reference electrode 5 was prepared. Subsequently, as illustrated in FIG. 1B and FIG. 2B, a mask layer 6 made of a polymer film was adhered to the electrode substrate 10. The material of the substrate 2 was alumina.

The surface area of the working electrode 3 was 12.56 $mm^2$. The material of the working electrode 3 and the counter electrode 4 was gold and the material of the reference electrode 5 was silver.

Next, the above-described bicontinuous microemulsion was dropped on one side of the electrode substrate 10 in the thickness direction so that the bicontinuous microemulsion would be in contact with and extend over the working electrode 3, the counter electrode 4, and the reference electrode 5.

Thereafter, the bicontinuous microemulsion 13 was covered with a covering member 11 made of glass. Subsequently, the bicontinuous microemulsion 13 was irradiated with ultraviolet light. By that means, a first gelatinizing agent was prepared and simultaneously the water phase was gelatinized. In this manner, the ion-conducting medium 7 was prepared. The thickness of the ion-conducting medium 7 was 1000 $\mu$m.

Next, 0.1 $cm^3$ of a toluene solution of ferrocene (a fat-soluble analyte) was dropped on a one-side surface of the ion-conducting medium 7 in the thickness direction. The ferrocene has a concentration of 5 mM.

After 1 minute passed since the drop, cyclic voltammetry was carried out using a potentiostat connected to the electrode device 1.

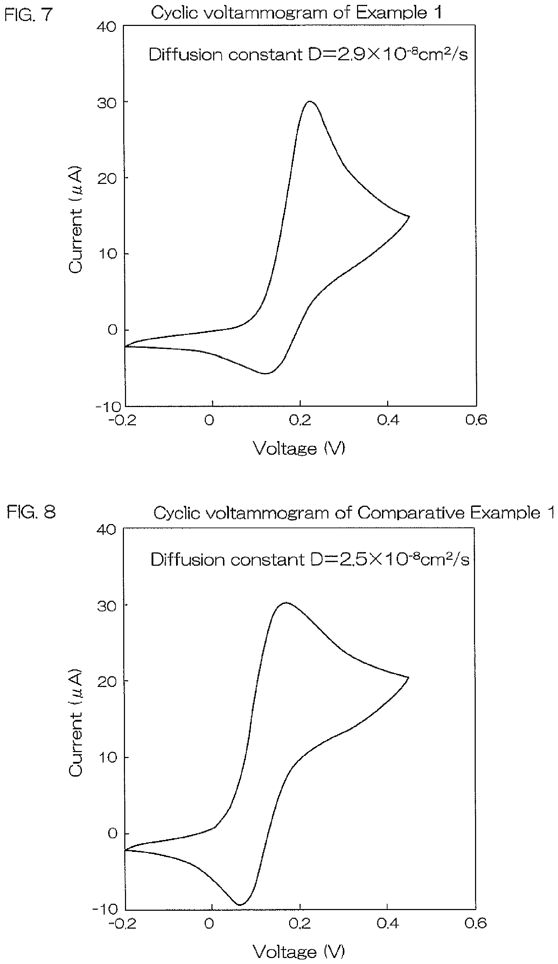

FIG. 7 depicts the cyclic voltammogram and diffusion constant obtained in Example 1.

Comparative Example 1

Except that the water phase of the bicontinuous microemulsion was not gelatinized and an electrolysis cell 12 was separately prepared as illustrated in FIG. 6, the same process as Example 1 was carried out.

Next, 10 $cm^3$ of the same bicontinuous microemulsion 13 as Example 1 in which both of the oil phase and the water phase were not gels but liquids was inserted into the electrolysis cell 12.

Separately, as illustrated in FIG. 1A and FIG. 2A, an electrode substrate 10 was prepared. Subsequently, as illustrated in FIG. 1B and FIG. 2B, a mask layer 6 is disposed on the electrode substrate 10 thereby defining a working electrode 3, a counter electrode 4, and a reference electrode 5.

Next, as illustrated in FIG. 6, the substrate 10, the working electrode 3, the counter electrode 4, and the reference electrode 5 were immersed into the bicontinuous microemulsion 13. Thereafter, cyclic voltammetry was carried out.

FIG. 8 depicts the cyclic voltammogram and diffusion constant obtained in Comparative Example 1.

Example 2

The same process as Example 1 was carried out except that the preparation of the ion-conducting medium 7 was changed as described below, the oil phase was gelatinized, and the method of preparing the gel was changed as described below.

In other words, all the components shown in Table 2 were blended and mixed in accordance with the amounts shown in Table 2, thereby preparing the mixture (a bicontinuous microemulsion). Then, the mixture was heated to 40°C.

Subsequently, the heated mixture was applied to an electrode substrate 10 disposed on a hot plate heated to 40°C, thereby preparing an application film made of the mixture.

Thereafter, a covering member 11 with translucency was disposed on a one-side surface in the thickness direction of the application film.

Thereafter, the application film (the mixture) was cooled down to 25°C, thereby gelatinizing the oil phase (as a physical gel). In this manner, an ion-conducting medium 7 in which the oil phase was a gel was prepared.

Next, 0.1 $cm^3$ of an aqueous solution of potassium ferricyanide (III) (a hydrophilic analyte) was dropped on a one-side surface in the thickness direction of the ion-conducting medium 7. The potassium ferricyanide (III) had a concentration of 5 mM.

After 1 minute passed since the drop, cyclic voltammetry was carried out using a potentiostat connected to the electrode device 1.

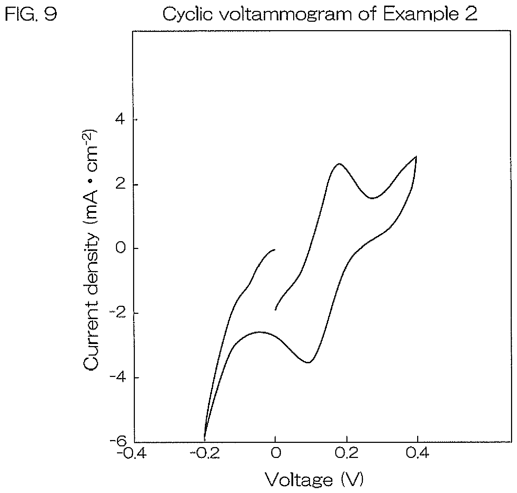

FIG. 9 depicts the cyclic voltammogram and diffusion constant obtained in Example 2.

<Observations>

(1) Example 1

As FIG. 7 shows, in Example 1, with the ion-conducting medium 7 of which water phase was a gel, the cyclic voltammetry of ferrocene that was a fat-soluble analyte was carried out. Further, the cyclic voltammograms of the Example 1 and Comparative Example 1 were almost the same and the diffusion constants thereof were nearly identical as well. As a result, it is determined that the excellent accuracy of the cyclic voltammetry was maintained in Example 1.

(2) Example 2

As FIG. 9 shows, in Example 2, with the ion-conducting medium 7 of which oil phase was a gel, the cyclic voltammetry of potassium ferricyanide (III) that was a hydrophilic analyte was carried out.

Table 1

| Phase | Type | | | Amount |
|---|---|---|---|---|
| Oil phase | Organic solvent | | Toluene | 10ml |
| Water phase | Electrolyte aqueous solution | | 1M Sodium nitrate aqueous solution | 10ml |
| | Gelatinizing agent material (First type) | Acrylamide monomer | Acrylamide | 1.777g |
| | | Cross-linkable monomer | N, N'-methylenebisacrylamide | 0.3620g |
| | | Photo initiator | Irgacure 2959 | 0.2028g |
| Surfactant | | | Sodium lauryl sulfate | 9.030g |
| Auxiliary surfactant | | | 2-butanol | 6.0ml |

Table 2

| Phase | Type | | Amount |
|---|---|---|---|
| Oil phase | Organic solvent | Toluene | 20m1 |
| | Second gelatinizing agent (Fourth type) | 12-hydroxystearic acid | 3.00g |
| Water phase | Water | | 20ml |
| | Sodium chloride | | 1.30g |
| Surfactant | | Sodium lauryl sulfate | 2.50g |
| Auxiliary surfactant | | 2-butanol | 5.00ml |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

Description of Reference Numerals

1    electrode device
2    substrate

3    working electrode (an example of the first electrode)

4    counter electrode (an example of the second electrode)

5    reference electrode

6    mask layer

7    ion-conducting medium

9    wire

10    electrode substrate

13    bicontinuous microemulsion

**Claims**

1.   An electrode device comprising:

    a first electrode (3);
    a second electrode (4,5) separated from the first electrode with a space therebetween; and
    an ion-conducting medium (7) extending over the first electrode and the second electrode so as to be in contact with the first electrode and the second electrode, **characterised in that** the ion-conducting medium is made of a bicontinuous microemulsion (13) containing a water phase being a continuous phase and an oil phase being a continuous phase, and
    at least one of the water phase and the oil phase is a gel.

2.   The electrode device according to Claim 1, wherein

    the first electrode (3) is a working electrode, and
    the second electrode (4) is a counter electrode.

3.   The electrode device according to Claim 2, further comprising:

    a reference electrode (5) separated from the working electrode and the counter electrode with a space between the reference electrode and the working electrode and a space between the reference electrode and the counter electrode, wherein
    the ion-conducting medium extending over the working electrode, the counter electrode, and the reference electrode so as to be in contact with the working electrode, the counter electrode, and the reference electrode.

4.   The electrode device according to Claim 1, wherein only one of the water phase and the oil phase is a gel.

5.   The electrode device according to Claim 4, wherein

    the oil phase does not contain an electrolyte, and
    the water phase contains an electrolyte.

6.   The electrode device according to Claim 1, wherein

    the first electrode and the second electrode each have a flat-belt shape, and
    the ion-conducting medium has a sheet shape.

**Patentansprüche**

1.   Elektrodenvorrichtung, umfassend:

    eine erste Elektrode (3);
    eine zweite Elektrode (4, 5), die von der ersten Elektrode mit einem Raum dazwischen getrennt ist; und

ein ionenleitendes Medium (7), das sich über die erste Elektrode und die zweite Elektrode erstreckt, um mit der ersten Elektrode und der zweiten Elektrode in Kontakt zu stehen, **dadurch gekennzeichnet, dass** das ionenleitende Medium aus einer beidseitig kontinuierlichen Mikroemulsion (13) hergestellt ist, die eine Wasserphase, die eine kontinuierliche Phase ist, und eine Ölphase enthält, die eine kontinuierliche Phase ist, und wenigstens eine der Wasserphase und der Ölphase ein Gel ist.

2. Elektrodenvorrichtung nach Anspruch 1, wobei

   die erste Elektrode (3) eine Arbeitselektrode ist, und
   die zweite Elektrode (4) eine Gegenelektrode ist.

3. Elektrodenvorrichtung nach Anspruch 2, ferner umfassend:

   eine Referenzelektrode (5), die von der Arbeitselektrode und der Gegenelektrode mit einem Raum zwischen der Referenzelektrode und der Arbeitselektrode und einem Raum zwischen der Referenzelektrode und der Gegenelektrode getrennt ist, wobei
   das ionenleitende Medium sich über die Arbeitselektrode, die Gegenelektrode und die Referenzelektrode erstreckt, um mit der Arbeitselektrode, der Gegenelektrode und der Referenzelektrode in Kontakt zu stehen.

4. Elektrodenvorrichtung nach Anspruch 1, wobei nur eine der Wasserphase und der Ölphase ein Gel ist.

5. Elektrodenvorrichtung nach Anspruch 4, wobei

   die Ölphase keinen Elektrolyten enthält, und
   die Wasserphase einen Elektrolyten enthält.

6. Elektrodenvorrichtung nach Anspruch 1, wobei

   die erste Elektrode und die zweite Elektrode jeweils eine flache Gürtelform aufweisen, und
   das ionenleitende Medium eine Scheibenform aufweist.


**Revendications**

1. Dispositif d'électrode comprenant :

   une première électrode (3) ;
   une deuxième électrode (4, 5) séparée de la première électrode par un espace entre elles ; et
   un support de conduction ionique (7) déployés au-dessus de la première électrode et de la deuxième électrode, de façon à être au contact de la première électrode et de la deuxième électrode, **caractérisé en ce que** le support de conduction ionique est réalisé avec une microémulsion bi-continue (13) contenant une phase aqueuse, qui est une phase continue, et une phase huileuse, qui est une phase continue, et au moins une de la phase aqueuse et de la phase huileuse étant un gel.

2. Dispositif d'électrode selon la revendication 1,

   la première électrode (3) étant une électrode active, et
   la deuxième électrode (4) étant une contre-électrode.

3. Dispositif d'électrode selon la revendication 2, comprenant en outre :

   une électrode de référence (5) séparée de l'électrode active et de la contre-électrode par un espace entre l'électrode de référence et l'électrode active, et un espace entre l'électrode de référence et la contre-électrode, le support de conduction ionique étant déployé au-dessus de l'électrode active, de la contre-électrode, et de l'électrode de référence de façon à être au contact de l'électrode active, de la contre-électrode, et de l'électrode de référence.

4. Dispositif d'électrode selon la revendication 1, seule une de la phase aqueuse et de la phase huileuse étant un gel.

**5.** Dispositif d'électrode selon la revendication 4,

la phase huileuse ne contenant pas un électrolyte, et
la phase aqueuse contenant un électrolyte.

**6.** Dispositif d'électrode selon la revendication 1,

la première électrode et la deuxième électrode ayant chacune la forme d'une courroie plate, et
le support de conduction ionique étant en forme de feuille.

Short-length direction

The other side ←→ One side

Long-length direction

FIG. 1A

8    X    3    4    9    9    Y    10    5    X

FIG. 1B

8    X    3    4    9    9    Y    10    6    5    9    X

FIG. 1C

8    X    3    4    7(13)    9    9    Y    2    6    5    9    1    X

FIG. 2A

FIG. 2B

FIG. 2C

FIG. 2D

Thickness direction
One side

Short-length direction
The other side

Thickness direction
One side

The other side — One side
Long-length direction
The other side

FIG. 3

FIG. 4

FIG. 5

The other side ←→ One side

Short-length direction

Long-length direction

FIG. 6

FIG. 7

Cyclic voltammogram of Example 1

Diffusion constant $D = 2.9 \times 10^{-8} cm^2/s$

FIG. 8

Cyclic voltammogram of Comparative Example 1

Diffusion constant $D = 2.5 \times 10^{-8} cm^2/s$

FIG. 9     Cyclic voltammogram of Example 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H9509196 W

• JP 2013141664 A

**Non-patent literature cited in the description**

• **KURAYA, EISUKE.** Development of Technique to Evaluate Antioxidative Substance Using Bicontinuous Microemulsion. Kumamoto University, 25 September 2015